# EUROPEAN PATENT SPECIFICATION

(11) **EP 2 240 001 B1**
(45) Date of publication and mention of the grant of the patent: **26.06.2019**
(21) Application number: 10159386.1
(22) Date of filing: 08.04.2010
(51) Int. Cl.: H05B 41/04, H05B 41/292

(54) **High pressure discharge lamp lighting device and illumination fixture using the same**
Niederdruck-Beleuchtungsvorrichtung mit Hochdruckentladungslampe und Leuchte damit
Dispositif d'éclairage de lampe à décharge haute pression et appareil d'éclairage l'utilisant

(30) Priority: 10.04.2009 JP 2009096260
(43) Date of publication of application: 13.10.2010
(73) Proprietor: Panasonic Intellectual Property Management Co., Ltd., Osaka-shi, Osaka 540-6207 (JP)
(72) Inventor: Kamoi, Takeshi, Kyoto Kyoto (JP)
(74) Representative: Rüger Abel

(56) References cited:
- EP-A1- 1 684 553
- WO-A1-01/84890
- US-A- 4 763 044
- US-A1- 2007 024 215

## Description

### [Field of the Invention]

The present invention relates to a high pressure discharge lamp lighting device for lighting a high-luminance high-pressure discharge lamp such as a high-pressure mercury lamp or metal halide lamp, and an illumination fixture using the high pressure discharge lamp lighting device.

### [Background Art]

EP 1 684 553 A1 discloses a high pressure discharge lamp lighting device, comprising: an electric power supply circuit for supplying electric power to a high-pressure discharge lamp; a starting voltage generating circuit for generating a starting high voltage to start discharging the high-pressure discharge lamp; and a control circuit for controlling the electric power supply circuit and the starting voltage generating circuit, the control circuit comprising: lighting discrimination means adapted to discriminate whether or not the high-pressure discharge lamp is lighting; means adapted to switch between a first operation period to operate the starting voltage generating circuit to start discharging the high-pressure discharge lamp and a second operation period to maintain a steady arc discharge after the high-pressure discharge lamp has started discharging, based on a result of discrimination from the lighting discrimination means. A timer circuit is provided to delay the application of a starting voltage when the discharge lamp transitions from normal lighting to an abnormal lighting condition.

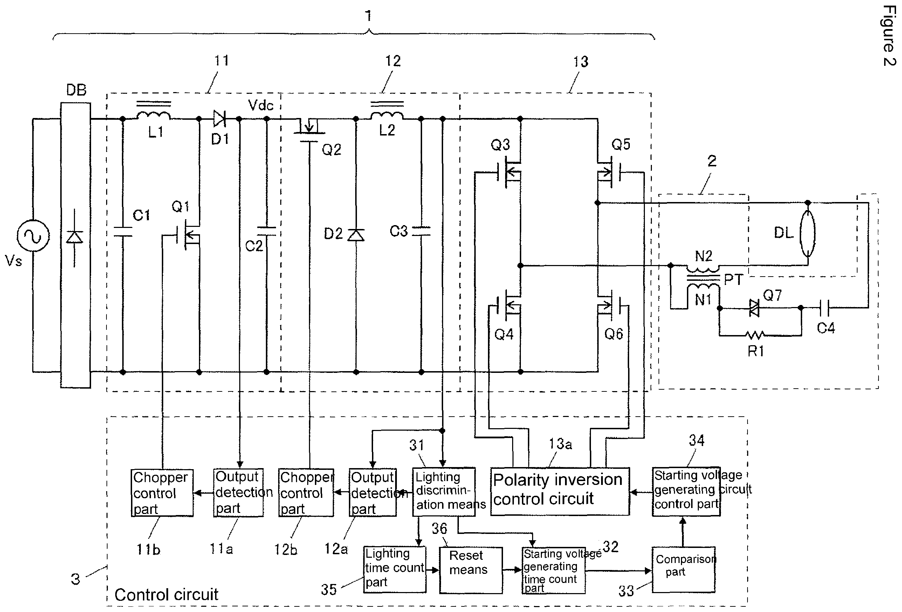

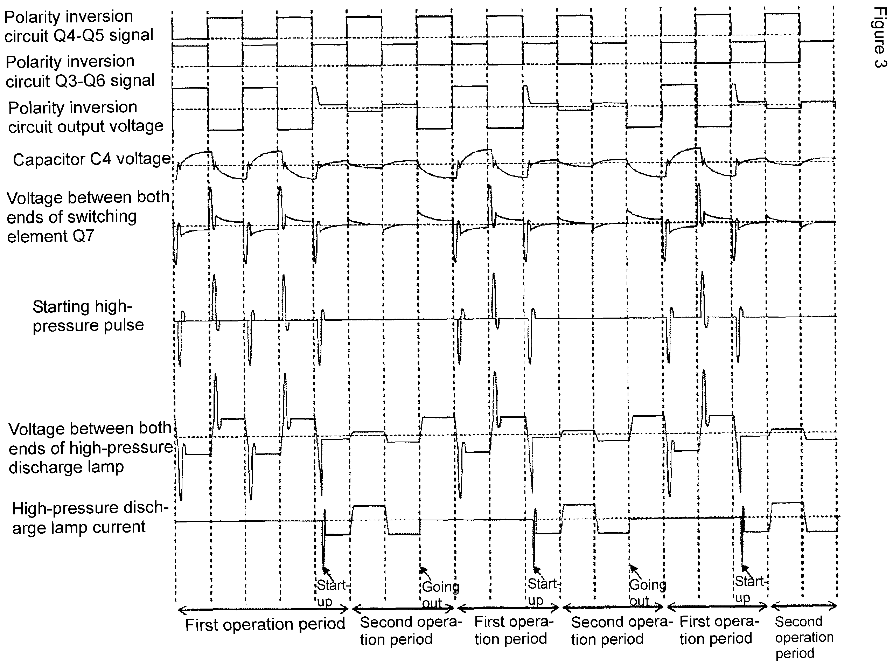

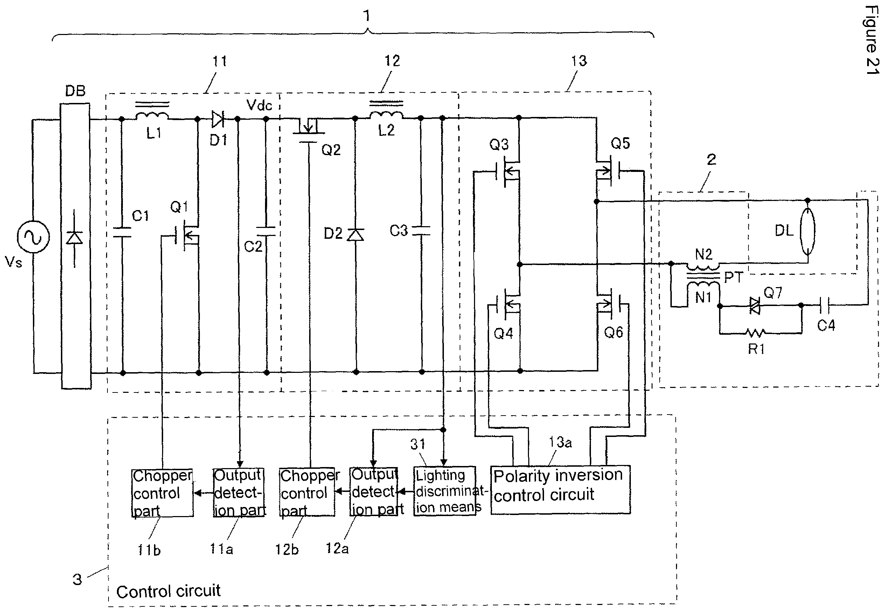

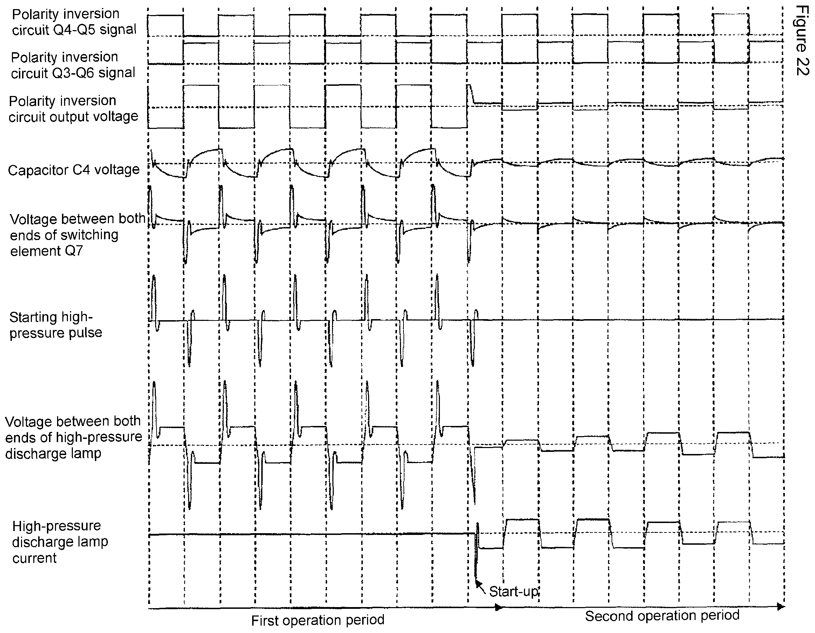

Fig. 21 is a circuit diagram of a conventional high pressure discharge lamp lighting device, and Fig. 22 is an operation waveform chart thereof. The detailed configuration and operation of the high pressure discharge lamp lighting device are described later in connection with the description of Fig. 2 and Fig. 3, and an outline of the operation is described here. When the high-pressure discharge lamp DL is not lighted, the high pressure discharge lamp lighting device operates in a starting mode to start a high-pressure discharge lamp DL. In the starting mode, to start the high-pressure discharge lamp DL smoothly, a step-down chopper circuit 12 outputs a DC voltage which is higher than the voltage which is applied when the high-pressure discharge lamp DL is steadily lighted. The DC voltage is converted into a rectangular wave AC voltage by a polarity inversion circuit 13, and the rectangular wave AC voltage is applied to the high-pressure discharge lamp DL via a starting voltage generating circuit 2. When the polarity of the rectangular wave AC voltage is inverted, a voltage responsive switching element Q7 turns on and the starting voltage generating circuit 2 generates a starting high voltage. When the starting high voltage is applied to the high-pressure discharge lamp DL, dielectric breakdown occurs and a glow discharge takes place. After shifting to an arc discharge state, lighting discrimination means 31 detects the fact that the high-pressure discharge lamp DL has been started. The mode is thereby shifted to a lighting mode. Then, an output detection part 12a detects an output voltage of the step-down chopper circuit 12, and a chopper control part 12b controls the operation of the step-down chopper circuit 12 so that a predetermined current corresponding to the output voltage can be provided, whereby a rectangular wave-shaped appropriate electric power is supplied to the high-pressure discharge lamp DL via the polarity inversion circuit 13 and the high-pressure discharge lamp DL lights steadily. The temperature and pressure in a light-emitting tube of the high-pressure discharge lamp DL gradually increases after start-up, and the high-pressure discharge lamp DL turns into a steady lighting state.

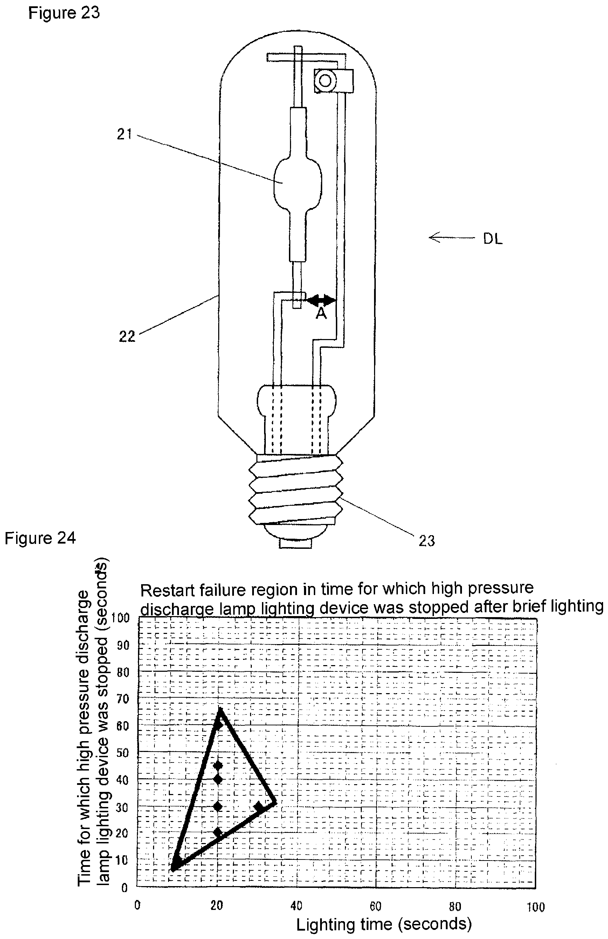

When the high-pressure discharge lamp DL goes out for some reason, the lighting discrimination means 31 detects the non-lighting state and determines that the high-pressure discharge lamp DL has extinguished. In such a case, to light the high-pressure discharge lamp DL again, a starting high voltage is generated and applied to the high-pressure discharge lamp DL by the starting voltage generating circuit 2. It is known that since the temperature and pressure in the light-emitting tube are very high when the high-pressure discharge lamp DL extinguishes from a steady lighting state, the dielectric breakdown voltage in this state can be a few dozen kV. To restart the high-pressure discharge lamp DL immediately in this state, it is necessary to apply a voltage of a few dozen kV as described above to the high-pressure discharge lamp. In this case, there are a problem of how to ensure the insulation of the appliance and wiring and a structural problem of the high-pressure discharge lamp. For example, in the case of an ordinary high-pressure discharge lamp having an Edison base 23 as shown in Fig. 23, when a voltage of a few dozen kV is applied, dielectric breakdown occurs in the Edison base or in an area designated as A in an outer tube 22 and a necessary voltage is not applied to a light-emitting tube 21. Therefore, ordinary high pressure discharge lamp lighting devices are designed to generate and apply a dielectric breakdown voltage for a high-pressure discharge lamp of interest in a sufficiently cooled state (approximately 4 kV, for example) at start-up. Thus, when the high-pressure discharge lamp is extinguished from a steady lighting state, it cannot be immediately restarted. The high-pressure discharge lamp can be restarted when the temperature in the light-emitting tube decreases and the dielectric breakdown voltage decreases to the starting high voltage that is generated by the starting voltage generating circuit 2 or lower.

As described above, immediately after a high-pressure discharge lamp extinguishes from a steady lighting state, the temperature and pressure in a light-emitting tube are high and the dielectric breakdown voltage is very high. The output of the high pressure discharge lamp lighting device in this state is generally the same as that in a no-load state in which the high-pressure discharge lamp is not connected. Since it is not easy to distinctly detect the no-load state and the state immediately after the extinction of the high-pressure discharge lamp, a starting high voltage is generated even in a no-load state. In addition, even when the high-pressure discharge lamp is at the end of useful life and a start failure occurs, the high pressure discharge lamp lighting device generates a starting high voltage.

When a starting high voltage is generated over a long period of time in such a no-load state or at the end of useful life of a high-pressure discharge lamp, the lighting device may be damaged. Therefore, Patent Document 1 (Patent No. 2778257) proposes a technique in which, in the case of a start failure, generation of a starting high voltage is repeated up to a predetermined number of times and the generation of a starting high voltage is stopped when the predetermined number of times is reached.

Moreover, it is said that when a high-pressure discharge lamp is extinguished from a steady lighting state, it takes about 10 minutes to restart it although it depends on the type of the high-pressure discharge lamp and the structure and the installation conditions of the appliance. Even when a starting high voltage is continuously generated during that time, the high-pressure discharge lamp cannot be started and a high voltage of about 4 kV, for example, continues to be applied between the both ends of the high-pressure discharge lamp. Since this wastes electric power and is not preferable from a safety point of view, Patent Document 2 (Japanese Unexamined Patent Publication No. 2001-35674) proposes generating a starting high voltage intermittently.

The possible reasons for extinction of a high-pressure discharge lamp includes (1) power shutdown (such as artificial shutdown or power failure) and (2) brief power fluctuations such as instantaneous power failure or instantaneous voltage drop. When (1) a power shutdown occurs, the control circuit is reset unless it has a non-volatile memory or the like since no power is supplied to the high pressure discharge lamp lighting device for a relatively long period of time. Therefore, an operation to restart the high-pressure discharge lamp must be performed after the restoration of the power source. On the other hand, when (2) a brief power fluctuation such as instantaneous power failure or instantaneous voltage drop occurs, the high-pressure discharge lamp goes out but the operation of the control circuit is maintained by an electric charge accumulated in a capacitor for a control power source. If the number of start failures during the process of starting the high-pressure discharge lamp is maintained as the operation information of the control circuit as described in Patent Document 1, when the high-pressure discharge lamp is restarted after the restoration of the power source, the predetermined number of start failures is reached before a starting high voltage is applied over the time necessary for restart, and the operation is stopped. In other cases, if the generation cycle of the intermittent starting high voltage is maintained as described in Patent Document 2, a failure occurs in which the operation is started from a quiescent period in the intermittent starting high voltage generating period and the starting high voltage cannot be immediately applied to the high-pressure discharge lamp.

In a high pressure discharge lamp lighting device disclosed in Patent Document 3 (Japanese Unexamined Patent Publication No. 63-307696) as means that can solve the problems, a technique is proposed in which: a going-out detection circuit for detecting a change of a high-pressure discharge lamp from a lighting state to a non-lighting state is provided; the information during the previous starting process is reset when the fact that the high-pressure discharge lamp has gone out is detected so that a starting high voltage can be applied immediately after the high-pressure discharge lamp goes out; and a sufficient time to apply a starting high voltage necessary for restart can be ensured.

### [Conventional Technique Document]

### [Patent Document]

[Patent document 1] Patent No. 2778257
[Patent document 2] Japanese Unexamined Patent Publication No. 2001-35674
[Patent document 3] Japanese Unexamined Patent Publication No. 63-307696

### [Disclosure of the Invention]

### [Problem to be solved by the Invention]

In the technique described in Patent Document 3, when the high-pressure discharge lamp shifts from a lighting state to a non-lighting state, the information acquired during the previous starting process is reset. However, when the high-pressure discharge lamp extinguishes after it has been lighted for a short period of time before reaching a steady lighting state, there are cases where it is undesirable to reset the information acquired during the previous starting process.

For example, when an end-of-life high-pressure discharge lamp is connected, a phenomenon is known as one state observed at the end of useful life in which, after a dielectric breakdown is caused by the starting high voltage and a glow discharge is formed, the high-pressure discharge lamp goes out after a brief transition to an arc discharge. In such a case, when the operation information during the starting process is reset upon detection of the fact that the high-pressure discharge lamp goes out as described in Patent Document 3, the operation information acquired during the starting process is reset every time the high-pressure discharge lamp goes out. Thus, a starting high voltage is applied every time the high-pressure discharge lamp goes out, and a failure occurs in which the cycle consisting of dielectric breakdown, glow discharge, arc discharge, going out, and application of a starting high voltage continues endlessly and generation of a starting high voltage cannot be stopped.

The present invention has been made in view of the above circumstances, and it is, therefore, an object of the present invention to provide a high pressure discharge lamp lighting device which can prevent generation of an unnecessary starting high voltage to ensure power saving and safety even when a high-pressure discharge lamp is fails to be started at, for example, the end of useful life, and which can provide a high-pressure discharge lamp with reliable starting and restarting characteristics in normal cases.

### [Means adapted to solve the Problems]

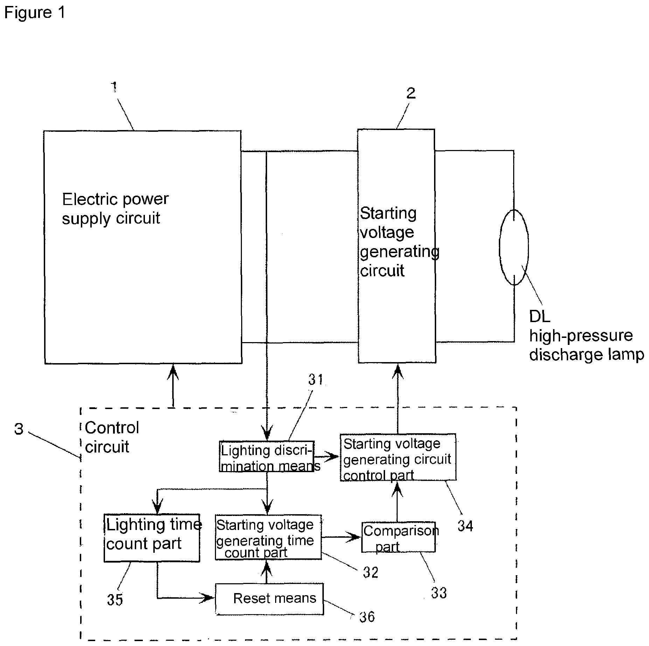

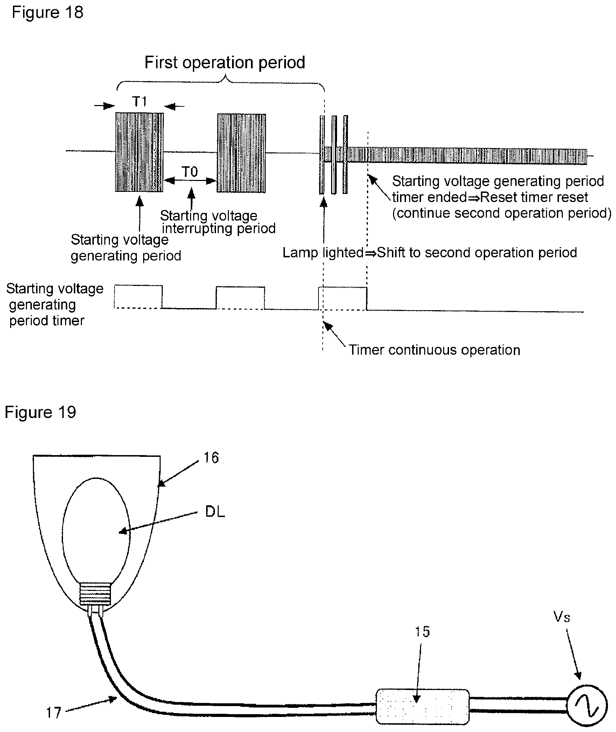

To solve the above problems, a high pressure discharge lamp lighting device according to a first aspect of the present invention includes, as shown in Fig. 1, an electric power supply circuit 1 for supplying electric power to a high-pressure discharge lamp DL; a starting voltage generating circuit 2 for generating a starting high voltage to start discharge of the high-pressure discharge lamp DL; and a control circuit 3 for controlling the electric power supply circuit 1 and the starting voltage generating circuit 2. The control circuit 3 includes: lighting discrimination means 31 for discriminating whether or not the high-pressure discharge lamp DL is lighting; means adapted to switch between a first operation period to operate the starting voltage generating circuit 2 to start discharge of the high-pressure discharge lamp DL and a second operation period to maintain steady arc discharge after the high-pressure discharge lamp DL has started discharging, based on a result of discrimination by the lighting discrimination means 31; measurement means 32 adapted to measure operation information of the first operation period; means 33 and 34 adapted to control an operation during the first operation period based on a result of measurement by the measurement means 32; and reset means 36 adapted to initialize the operation information of the first operation period measured by the measurement means 32 when the second operation period has continued for a reference time or longer. To initialize herein means to restore the operation information to the state where it was when the power source is first applied. As for the reset means 36, it is not essential to provide measure means 35 for measuring operation information of the second operation period, and the measure means 32 for measuring operation information of the first operation period may serve also as the measure means 35 (Fig. 18).

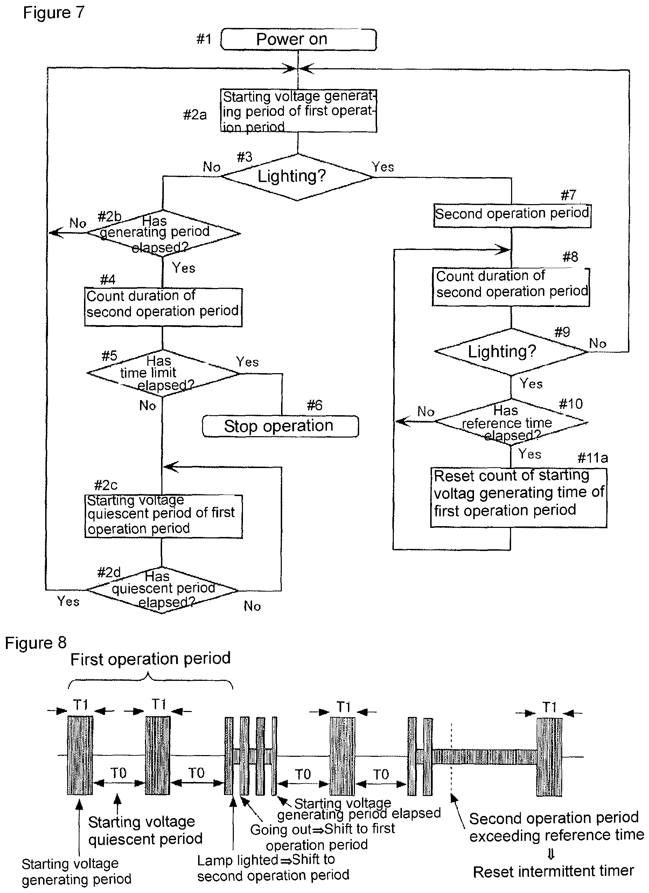

The invention according to a second aspect of the present invention is the invention according to the first aspect of the present invention having means adapted to measure a starting voltage generating period for which a starting high voltage is generated during the first operation period (#2b in Fig. 7), and means adapted to measure a starting voltage quiescent period during which generation of the starting high voltage is interrupted (#2d in Fig. 7), as the measurement means adapted to measure operation information of the first operation.

The invention according a third aspect of the present invention is the invention according the second aspect of the present invention, wherein the operation information of the first operation period measured by the measurement means is measurement time of the starting voltage generating period for which a starting high voltage is generated during the first operation period (see #11a in Fig. 7, Fig. 10 and Fig. 12).

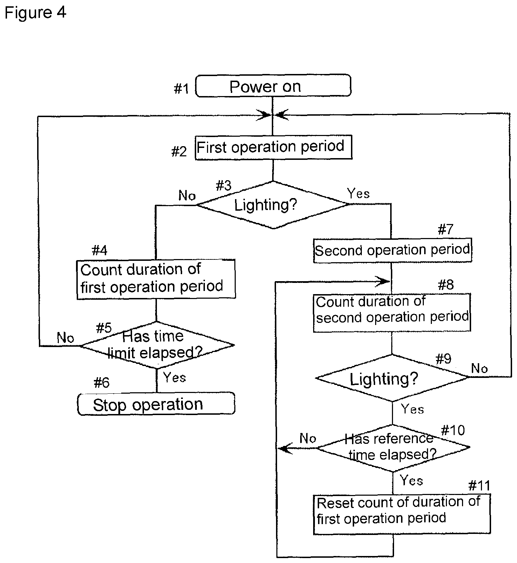

The invention according a fourth aspect of the present invention is the invention according the first or second aspect of the present invention, wherein the operation information of the first operation period measured by the measurement means is the duration of the first operation period (see #11 in Fig. 4, Fig. 10 and Fig. 12).

The invention according to a fifth aspect of the present invention is the invention according to any one of the first to fourth aspects of the present invention, wherein the reference time is 0.5 seconds or longer.

The invention according to a sixth aspect of the present invention is the invention according to the fifth aspects of the present invention, wherein the reference time is 30 seconds or shorter (see Fig. 24).

The invention according to a seventh aspect of the present invention is the invention according to any one of the second to fourth aspects of the present invention, wherein the means adapted to measure the starting voltage generating period for which a starting high voltage is generated during the first operation continues measurement of the starting voltage generating period even after the high-pressure discharge lamp has lighted and a shift to the second operation period has been completed, and determines that the second operation period has continued for a reference time or longer upon condition that the high-pressure discharge lamp has been lighting upon completion of the starting voltage generating period (see Fig. 18).

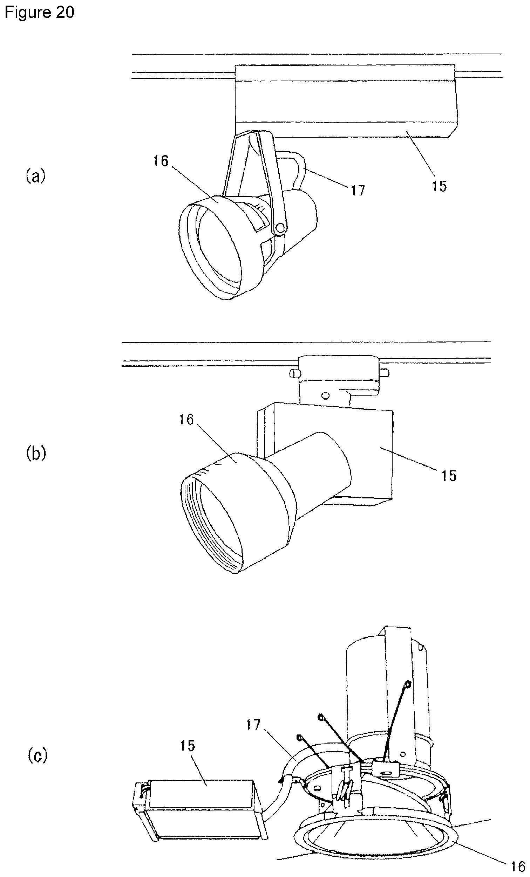

The invention according to an eighth aspect of the present invention is an illumination fixture including the high pressure discharge lamp lighting device according to any one of the first to seventh aspects of the present invention (Fig. 19, Fig. 20).

### [Effect of the Invention]

According to the present invention, when the high-pressure discharge lamp starts discharging and shifts into the second operation period, the operation information of the first operation period is not unconditionally initialized, and the operation information of the first operation period is initialized when the second operation period has continued for a predetermined reference time or longer. Therefore, even when an end-of-life high-pressure discharge lamp is connected, generation of an unnecessary starting high voltage is not continued, and, when a normal high-pressure discharge lamp is connected, the high-pressure discharge lamp can be reliably restarted even if brief power fluctuations such as instantaneous power failure or instantaneous voltage drop occur.

### [Brief Description of the Drawings]

FIG. 1 is a block diagram illustrating a general configuration of a first embodiment of the present invention.
Fig. 2 is a circuit diagram illustrating a specific circuit configuration of the first embodiment of the present invention.
Fig. 3 is a waveform chart showing operation waveforms of various parts of the first embodiment of the present invention.
Fig. 4 is a flowchart showing a control of the first embodiment of the present invention.
Fig. 5 is an explanatory diagram conceptually showing an operation of the first embodiment of the present invention.
Fig. 6 is a circuit diagram illustrating a circuit configuration of a second embodiment of the present invention.
Fig. 7 is a flowchart showing a control of the second embodiment of the present invention.
Fig. 8 is an explanatory diagram conceptually showing an operation of the second embodiment of the present invention.
Fig. 9 is a circuit diagram illustrating a circuit configuration of a first modification of the second embodiment of the present invention.
Fig. 10 is a flowchart showing a control of the first modification of the second embodiment of the present invention.
Fig. 11 is an explanatory diagram conceptually showing an operation of the first modification of the second embodiment of the present invention.
Fig. 12 is a flowchart showing a control of a second modification of the second embodiment of the present invention.
Fig. 13 is an explanatory diagram conceptually showing an operation of the second modification of the second embodiment of the present invention.
Fig. 14 is a circuit diagram illustrating a circuit configuration of a third embodiment of the present invention.
Fig. 15 is a waveform chart showing operation waveforms of various parts of the third embodiment of the present invention.
Fig. 16 is a circuit diagram illustrating a circuit configuration of a fourth embodiment of the present invention.
Fig. 17 is a flowchart showing a control of the fourth embodiment of the present invention.
Fig. 18 is an explanatory diagram conceptually showing an operation of the fourth embodiment of the present invention.
Fig. 19 is a schematic configuration diagram of an illumination fixture using a high pressure discharge lamp lighting device of the present invention.
Fig. 20 is a perspective view of an illumination fixture using a high pressure discharge lamp lighting device of the present invention.
Fig. 21 is a circuit diagram of a conventional high pressure discharge lamp lighting device.
Fig. 22 is a waveform chart showing operation waveforms of various parts of a conventional high pressure discharge lamp lighting device.
Fig. 23 is a front view illustrating a general configuration of a high-pressure discharge lamp suitable for the present invention.
Fig. 24 is a characteristic diagram showing a characteristic of a high-pressure discharge lamp suitable for the present invention.

### [Best Mode for Carrying Out the Invention]

### (First Embodiment)

Fig. 1 is a block diagram illustrating a configuration of a high pressure discharge lamp lighting device according to a first embodiment of the present invention. The lighting device has an electric power supply circuit 1 for supplying electric power to a high-pressure discharge lamp DL; a starting voltage generating circuit 2 for generating a starting high voltage to start discharge of the high-pressure discharge lamp DL; and a control circuit 3 for controlling the electric power supply circuit 1 and the starting voltage generating circuit 2. The control circuit 3 has lighting discrimination means 31 for discriminating whether or not the high-pressure discharge lamp DL is lighting. The lighting device switches, based on the result of discrimination by the lighting discrimination means 31, between a first operation period (starting mode) to operate the starting voltage generating circuit 2 to start discharge of the high-pressure discharge lamp DL and a second operation period (lighting mode) to maintain steady arc discharge after the high-pressure discharge lamp DL has started discharging. In the first operation period, the control circuit 3 controls the starting voltage generating circuit 2 to generate a starting high voltage. In the second operation period, the control circuit 3 controls the electric power supply circuit 1 so that the high-pressure discharge lamp 2 can have an output suitable for maintaining arc discharge.

The control circuit 3 has a starting voltage generating time count part 32 as measurement means adapted to measure operation information of the first operation period (starting mode). The control circuit 3 has a comparison part 33 and a starting voltage generating circuit control part 34 as means adapted to control the operation in the first operation period based on the result of measurement by the measurement means. The comparison part 33 compares the starting voltage generating time measured by the starting voltage generating time count part 32 with a predetermined time limit, and, when the measured time exceeds the predetermined time limit, causes the starting voltage generating circuit control part 34 to stop the operation of the starting voltage generating circuit 2.

The control circuit 3 has a lighting time count part 35 for measuring the duration of the second operation period when, in an operation process in which discharge is started upon generation of a starting high voltage at the first-time start-up or restart and a transition to arc discharge occurs, the lighting discrimination means 31 determines that the high-pressure discharge lamp DL is lighting and a shift to the second operation period is completed. When the duration of the second operation period reaches a predetermined reference time, reset means 36 resets the count value of the starting voltage generating time count part 32.

Fig. 2 is a circuit diagram illustrating a specific circuit configuration of this embodiment. The electric power supply circuit 1 is composed of a full-wave rectifying circuit DB; a step-up chopper circuit 11; a step-down chopper circuit 12; and a polarity inversion circuit 13. The full-wave rectifying circuit DB is a diode bridge circuit which is connected to a commercial AC power source Vs, rectifies the AC voltage from the commercial AC power source Vs, and outputs a pulsating voltage. The step-up chopper circuit 11 receives the voltage rectified by the full-wave rectifying circuit DB and outputs a stepped-up DC voltage Vdc. The step-down chopper circuit 12 is controlled so as to supply appropriate electric power to the high-pressure discharge lamp DL from a DC voltage Vdc as a power source. The polarity inversion circuit 13 converts the DC output from the step-down chopper circuit 2 into a rectangular wave AC voltage and applies it to the high-pressure discharge lamp DL.

The circuit configuration of the step-up chopper circuit 11 is described below. Between output ends of the full-wave rectifying circuit DB, an input capacitor C1 is connected in parallel and a series circuit of an inductor L1 and a switching element Q1 is connected. A smoothing capacitor C2 is connected between both ends of the switching element Q1 via a diode D1. The on and off of the switching element Q1 are controlled by a chopper control part 11b of the control circuit 3. The switching element Q1 is controlled to switch on and off at a frequency which is sufficiently higher than the commercial frequency of the commercial AC power source Vs, so that the output voltage of the full-wave rectifying circuit DB is stepped up to a specified DC voltage Vdc and charged into the smoothing capacitor C2, and a power factor improvement control that provides the circuit with resistivity is performed so that a phase shift between the input current and input voltage from the commercial AC power source Vs does not occur. A filter circuit for preventing leakage of high-frequency waves may be provided at the AC input ends of the full-wave rectifying circuit DB.

The step-down chopper circuit 12 has a function of a ballast for supplying target electric power to the high-pressure discharge lamp DL as a load. Also, the output voltage of the step-down chopper circuit 12 is variably controlled by the control circuit 3 so that appropriate electric power can be supplied to the high-pressure discharge lamp DL from start-up through an arc discharge transition period to a steady lighting period.

The circuit configuration of the step-down chopper circuit 12 is described below. A positive electrode of the smoothing capacitor C2 as a DC power source is connected to a positive electrode of a capacitor C3 via a switching element Q2 and an inductor L2, and a negative electrode of the capacitor C3 is connected to a negative electrode of the smoothing capacitor C2. The anode of a regenerated current passing diode D2 is connected to the negative electrode of the capacitor C3, and the cathode of the diode D2 is connected to the connection point between the switching element Q2 and the inductor L2.

The circuit operation of the step-down chopper circuit 12 is described below. The switching element Q2 is driven on and off at a high frequency by the output of a chopper control part 12b of the control circuit 3. A current flows from the smoothing capacitor C2 as a DC power source through the switching element Q2, the inductor L2, and the capacitor C3 when the switching element Q2 is on, and a regenerated current flows through the inductor L2, the capacitor C3, and the diode D2 when the switching element Q2 is off. A DC voltage stepped down from the DC voltage Vdc is thereby charged into the capacitor C3. The voltage that is obtained in the capacitor C3 can be variably controlled by varying the on duty (ratio of on-time in one cycle) of the switching element Q2 by the chopper control part 12b.

The polarity inversion circuit 13 is connected to the output of the step-down chopper circuit 12. The polarity inversion circuit 13 is a full-bridge circuit composed of switching elements Q3 to Q6. A pair of the switching elements Q3 and Q6 and a pair of the switching elements Q4 and Q5 alternately are turned on at a low frequency with control signals from a polarity inversion control circuit 13a, thereby converting the output electric power of the step-down chopper circuit 12 into rectangular wave AC electric power and supplying it to the high-pressure discharge lamp DL. The high-pressure discharge lamp DL as a load is a high-luminance high-pressure discharge lamp (HID lamp) such as a metal halide lamp or high-pressure mercury lamp.

The starting voltage generating circuit 2 is composed of a pulse transformer PT having a secondary winding N2 connected between the output of the polarity inversion circuit 13 and the high-pressure discharge lamp DL; a voltage responsive switching element Q7 which turns on when the voltage between both ends thereof exceeds a predetermined value; a capacitor C4 connected in series to the primary winding N1 of a pulse transformer T1 and a switching element Q7; and a resistance R1 connected in parallel with the switching element Q7 and charges the capacitor C4 when the switching element Q7 is off.

In the starting voltage generating circuit 2, the capacitor C4 is charged via the primary winding N1 of the pulse transformer PT and the resistance R1. Here, the sum of the output voltage of the polarity inversion circuit 13 and the voltage Vc4 of the capacitor C4 is applied to the voltage responsive switching element Q7. The output voltage of the polarity inversion circuit 13 is almost equal to the output voltage value Vc3 of the step-down chopper circuit 12, and the switching element Q7 does not turn on when the rectangular wave voltage is stable since the voltage between both the ends of the switching element Q7 is |Vc3|-|Vc4|, which is lower than the on-voltage of the switching element Q7.

However, when the polarity of the rectangular wave voltage is inverted, the voltage of the capacitor C4 is not varied rapidly since the capacitor C4 is charged via the resistance R1, and a voltage |Vc3|+|Vc4|, which is equal to or higher than the on-voltage of the switching element Q7, is applied to the switching element Q7 and the switching element Q7 is turned on. As a result, a steep pulse current flows through the primary winding N1 of the pulse transformer T1 from the capacitors C3 and C4 as power sources, and a voltage which is the turn ratio times higher than the voltage generated in the primary winding N1 is generated in the secondary winding N2 and applied to the high-pressure discharge lamp DL.

The control circuit 3 is next described. The step-up chopper circuit 11, the step-down chopper circuit 12, and the polarity inversion circuit 13 described above are controlled by the control circuit 3 for proper operation. Also, to control the generation and interruption of a starting voltage by the starting voltage generating circuit 2, the control circuit 3 controls the step-down chopper circuit 12 and the polarity inversion circuit 13.

The control circuit 3 has, as means adapted to control the step-up chopper circuit 11, an output detection part 11a for detecting the output voltage Vdc of the step-up chopper circuit 11; and a chopper control part 11b for controlling the switching element Q1 so that the output voltage Vdc detected by the output detection part 11a can be a constant voltage.

The control circuit 3 also has, as means adapted to control the step-down chopper circuit 12, an output detection part 12a for detecting the output voltage of the step-down chopper circuit 12; and the chopper control part 12b for controlling the switching element Q2 so that a predetermined output current corresponding to the output voltage detected by the output detection part 12a can be obtained. The step-down chopper circuit 12 is controlled so that appropriate electric power can be supplied to the high-pressure discharge lamp DL by these circuits.

The control circuit 3 also has, as means adapted to control the polarity inversion circuit 13, the polarity inversion control circuit 13a for controlling the switching elements Q3 to Q6 of the polarity inversion circuit 13.

In addition, the control circuit 3 has the lighting discrimination means 31 for discriminating whether or not the high-pressure discharge lamp DL is lighting based on the output voltage of the step-down chopper circuit 12; the lighting time count part 35 for measuring the elapsed time since the high-pressure discharge lamp DL is lighted in response to the result of discrimination by the lighting discrimination means 31; the starting voltage generating time count part 32 for measuring the operation time of the starting voltage generating circuit 2; the comparison part 33 for comparing the operation time of the starting voltage generating circuit 2 measured by the starting voltage generating time count part 32 with a predetermined time limit; a starting voltage generating circuit control circuit 34 for controlling the operation and interruption of the starting voltage generating circuit 2 in response to the result from the comparison part 33; and reset means 36 adapted to reset the operation time of the starting voltage generating circuit 2 measured by the starting voltage generating time count part 32 when the lighting time measured by the lighting time count part 35 exceeds a predetermined reference time.

While the configuration of the control circuit 3 is illustrated in a functional block diagram in Fig. 2, the control circuit 3 may be partially or entirely replaced by a microcomputer with software that realizes the functions of the control circuit 3.

Fig. 3 is an operation waveform chart of this embodiment. When the high-pressure discharge lamp DL is not lighting, as a first operation period to start the high-pressure discharge lamp DL, the step-down chopper circuit 12 outputs a DC voltage which is higher than the voltage which is output when the high-pressure discharge lamp DL is steadily lighting, and the polarity inversion circuit 13 converts the DC voltage into a rectangular wave AC voltage and applies it to the high-pressure discharge lamp DL via the starting voltage generating circuit 2. After the high-pressure discharge lamp DL is started by the application of a starting high voltage, the process shifts to a second operation period to maintain a steady arc discharge. When the high-pressure discharge lamp DL goes out, the voltage between both ends of the high-pressure discharge lamp DL increases. When this voltage increase is detected and the lighting discrimination means 31 determines that the high-pressure discharge lamp DL is not lighting, the process returns to the first operation period.

Fig. 4 is a flowchart showing the control at start-up in this embodiment. When a power is turned on in #1, the first operation period (starting mode) is started in #2, and the lighting discrimination means 31 determines in #3 whether or not the high-pressure discharge lamp DL has been started. The starting voltage generating time count part 32 measures the time for which the starting high voltage is generated, from when the high-pressure discharge lamp DL is started until the lighting discrimination means 31 determines that the high-pressure discharge lamp DL is lighting (#4). When the high-pressure discharge lamp DL is not started for some reason, or the commercial power source is applied to the high pressure discharge lamp lighting device with the high-pressure discharge lamp DL unconnected, the starting voltage generating circuit 2 continues to operate to generate the starting high voltage. At this time, the comparison part 33 compares the time for which the starting high voltage is generated with a predetermined time limit (#5). When the count value of the duration of the first operation period exceeds the predetermined time limit, a control signal is sent from the starting voltage generating circuit control part 34 to the polarity inversion control circuit 13a so as to turn off the switching elements Q3 to Q6 of the polarity inversion circuit 13 to stop the operation of the starting voltage generating circuit 2 by stopping the operation of the polarity inversion circuit 13 (#6).

When the high-pressure discharge lamp DL is started, the lighting discrimination means 31 detects the fact that the high-pressure discharge lamp DL has been started (#3), and the process shifts to the second operation period to light the high-pressure discharge lamp DL steadily (#7). In the second operation period, the output detection part 12a detects the output voltage of the step-down chopper circuit 12, and the chopper control part 12b controls the operation of the step-down chopper circuit 12 so that a predetermined output current corresponding to the output voltage can be obtained, whereby rectangular wave shaped appropriate electric power is supplied to the high-pressure discharge lamp DL via the polarity inversion circuit 13 to maintain steady lighting of the high-pressure discharge lamp DL.

The lighting time count part 35 counts the lighting time of the high-pressure discharge lamp DL in response to the detection, by the lighting discrimination means 31, of the fact that the high-pressure discharge lamp DL has been started (#8). When the high-pressure discharge lamp DL goes out in midstream, the process returns to #2 and resume first operation period (#9). When the lighting time of the high-pressure discharge lamp DL exceeds a predetermined reference time (#10), the time for which the starting high voltage is generated and which is measured by the starting voltage generating time count part 32 (the count value of the duration of the first operation period) is reset by the reset means 36 (#11).

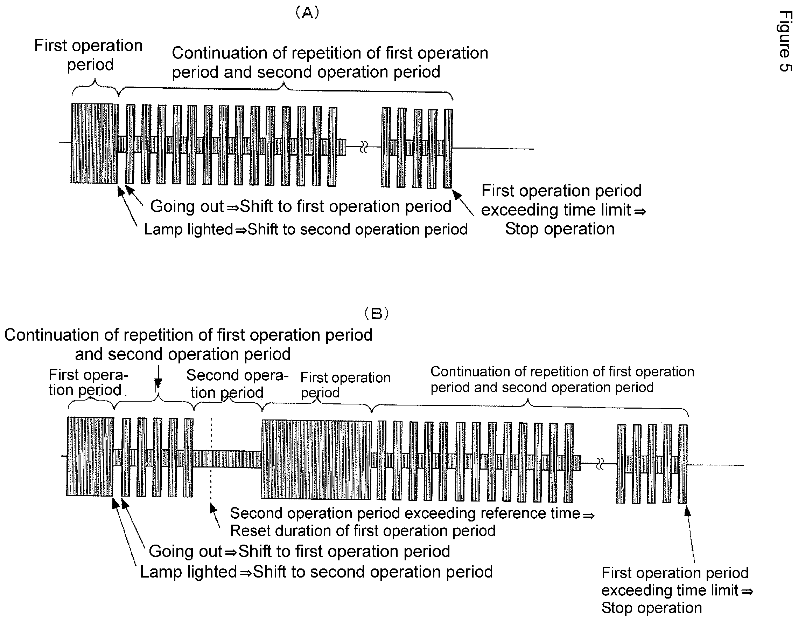

Fig. 5 is an explanatory diagram conceptually illustrating the operation at start-up in this embodiment. The horizontal axis represents the elapsed time after the start of the operation, and the vertical axis schematically represents the envelopes of the voltage between both ends of the high-pressure discharge lamp DL. Fig. 5(A) shows the operation in the case where an end-of-life high-pressure discharge lamp is connected. In this case, the high-pressure discharge lamp is started by the starting high voltage and an arc discharge is temporarily formed but the second operation period does not continue beyond the reference time since steady discharge cannot be maintained. Then, the operation consisting of start-up, lighting, and extinction is repeated with the measured generating time for which the starting high voltage is generated (the count value of the duration of the first operation) left unreset. When the cumulative total of the starting high voltage generating time exceeds the time limit in the comparison part 33, the operation of the starting voltage generating circuit 2 is stopped and continuation of generation of a starting high voltage can be therefore prevented.

On the other hand, Fig. 5(B) shows the operation in the case where a normal high-pressure discharge lamp is connected. In the process of starting an ordinary normal high-pressure discharge lamp, a phenomenon such as going out or a half-wave discharge is also observed during the process of a transition from dielectric breakdown caused by the starting high voltage through glow discharge to arc discharge but it does not last long. It can be therefore said that when an arc discharge is maintained for, for example, about 0.5 seconds and then the second operation period is continued, after the start-up of the high-pressure discharge lamp DL, the possibility that the high-pressure discharge lamp goes out is low. Thus, when a steady arc discharge is maintained for a predetermined reference time (for 0.5 seconds or longer, for example), the reset means 36 resets the time measured by the starting voltage generating time count part 32. After that, even when the high-pressure discharge lamp DL goes out for some reason, the starting high voltage can be generated from the initial state as long as the reference time set in the comparison part 33 has been elapsed. It is therefore possible to ensure sufficient time for the starting high voltage to be generated in comparison with the time necessary to restart the high-pressure discharge lamp DL.

When the high-pressure discharge lamp DL goes out for some reason after it has been steadily lighted, it is necessary to generate a starting high voltage and apply the starting high voltage to the high-pressure discharge lamp DL to restart it. If the timing when the time measured by the starting voltage generating time count part 32 is reset is after the high-pressure discharge lamp DL has been lighted sufficiently steadily, the possibility that the high-pressure discharge lamp DL goes out before the measured time is reset increases. In this case, it is impossible to ensure sufficient starting voltage generating time at restart. Therefore, the reference time for use in determining whether or not to reset is preferably set to a value between about 0.5 seconds and about 30 seconds.

### (Second Embodiment)

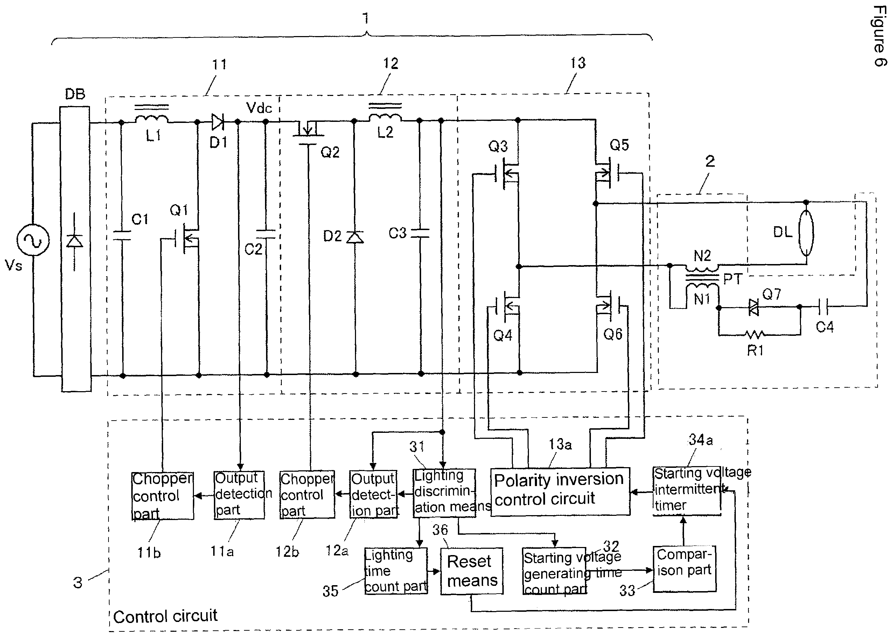

Fig. 6 is a circuit diagram of a high pressure discharge lamp lighting device according to a second embodiment of the present invention. The differences from the first embodiment are that a starting voltage intermittent timer 34a for intermittently generating a starting high voltage is provided as the starting voltage generating circuit control part 34 in Fig. 2, and that the reset means 36 resets the count of the starting voltage intermittent timer 34a when the lighting time measured by the lighting time count part 35 exceeds a reference time. The other configuration and operations are the same as those of the first embodiment, and redundant explanation is therefore omitted.

Fig. 7 shows a flowchart of control of this embodiment. The first operation period in the control shown in Fig. 4 is divided into a starting voltage generating period and a starting voltage quiescent period by combining the controls in #2a to #2d to compose the first operation period in #2. Also, when the second operation period has continued for a reference time or longer in #10, the count of the starting voltage generating period T1 in the first operation period is reset.

Fig. 8 shows a conceptual diagram of operation of this embodiment. The horizontal axis represents the elapsed time after the start of the operation, and the vertical axis schematically represents the envelopes of the voltage between both ends of the high-pressure discharge lamp DL. In the first operation period to start the high-pressure discharge lamp DL, the starting voltage generating circuit 2 alternately repeats a starting voltage generating period T1 for which a starting high voltage is generated and a starting voltage quiescent period T0 for which the starting high voltage generating operation is interrupted, at intervals of the starting voltage intermittent timer 34a as a starting voltage generating circuit control part.

Referring to the flowchart in Fig. 7, a starting voltage generating period is started in #2a, and, if the high-pressure discharge lamp DL is not lighting in #3, the starting voltage generating period is continued until the starting voltage generating period T1 has elapsed in #2b. After the starting voltage generating period T1 has elapsed, a starting voltage quiescent period is started in #2c when the duration of the first operation period is within the time limit in #4 to #6, and the starting voltage quiescent period is continued until the starting voltage interrupting period T0 elapses in #2d.

When the high-pressure discharge lamp DL is started by a starting high voltage generated during the starting voltage generating period T1, the lighting discrimination means 31 detects the fact that the high-pressure discharge lamp DL has been started (#3). Then, when the process shifts to the second operation period to light the high-pressure discharge lamp DL steadily (#7), the lighting time count part 35 starts measuring the lighting time (#8). When the high-pressure discharge lamp goes out before the lighting time exceeds the reference time, the process shifts to the first operation period again by the lighting discrimination means 31 and a starting high voltage is generated. Referring to the flowchart in Fig. 7, if it is determined that the high-pressure discharge lamp DL is not lighting in #9 before the reference time elapses in #10, the process returns to #2a and the starting voltage generating period of the first operation period is resumed. At this time, since the starting voltage intermittent timer 34a has not been reset, the count operation of the starting voltage generating period is resumed from a point in the middle of the starting voltage generating period described before.

In the case where a phenomenon in which the high-pressure discharge lamp goes out before the lighting time exceeds the reference time repeatedly occurs, the process shifts to the starting voltage quiescent period when the total of the starting high voltage generating times reaches the starting voltage generating period of the starting voltage intermittent timer 34a (#2b), and the generation of a starting high voltage is interrupted (#2c). When the starting voltage quiescent period has elapsed (#2d), the process shifts to the starting voltage generating period again (#2a) and a starting high voltage is generated to start the high-pressure discharge lamp.

The reset means 36 resets the starting voltage intermittent timer 34a when the lighting operation is continued for a reference time or longer after the high-pressure discharge lamp has been started and a shift to the second operation period has been completed. Therefore, at restart in the event, for example, that the high-pressure discharge lamp DL goes out for some reason thereafter, an operation from an initial state is performed to ensure sufficient starting voltage generating period.

It should be noted that the operation of the starting voltage generating circuit 2 is stopped by stopping the operation of the polarity inversion circuit 13 when the count value of the duration of the first operation period exceeds a predetermined time limit as in the case of the first embodiment (#4 to #6).

As described above, since the temperature and pressure in the light-emitting tube of the high-pressure discharge lamp are high at restart after the high-pressure discharge lamp has been steadily lighted, the high-pressure discharge lamp is not restarted when a starting high voltage is applied immediately after extinction. After that, as the temperature of the high-pressure discharge lamp decreases, the dielectric breakdown voltage gradually decreases, which enables the starting high voltage to cause a dielectric breakdown and in turn a grow discharge. When the temperature further decreases, after having a dielectric breakdown and a grow discharge caused by the starting high voltage, the high-pressure discharge lamp transits to an arc discharging state and establishes a steady lighting state. During this process, the high-pressure discharge lamp may go out again after a brief transition to arc discharge.

The high pressure discharge lamp lighting device is controlled so as to pass a predetermined current corresponding to the voltage of the high-pressure discharge lamp and supply appropriate electric power to ensure a rapid transition to a steady lighting state when a transition to an arc discharging state occurs, but repeats the first operation period and the second operation period when the high pressure discharge lamp goes out again after a transition to the arc discharging state at restart.

Here, if the operation information acquired during the starting process is unconditionally reset when a change of the high-pressure discharge lamp from a lighting state to a non-lighting state or vice versa is detected as described in the above-mentioned Patent Document 3, a starting high voltage is applied from the initial state and a cycle consisting of dielectric breakdown, glow discharge, arc discharge, going out, and application of starting high voltage is continued every time the high-pressure discharge lamp goes out since the count operation of the starting voltage intermittent timer 34a is reset to the initial state every time the high-pressure discharge lamp goes out. As a result, the temperature of the high-pressure discharge lamp does not decrease, and a failure occurs in which restart takes longer than usual or restart cannot be made and a starting high voltage is continuously applied. In such a case, it is effective to decrease the temperature of the high-pressure discharge lamp DL by finishing the starting voltage generating period T1 earlier than when it is counted from the initial state and making a shift to the starting voltage quiescent period T0.

A certain type of high-pressure discharge lamp, when it is extinguished after it has been lighted for a short period of time before reaching a steady lighting state, falls into a state in which it cannot be easily started when power is turned on immediately after extinction. For example, Fig. 24 shows a result of investigation conducted to determine whether or not a high-color rendering and high-efficiency metal halide lamp can be restarted when it is extinguished after it has been lighted for a short period of time and power is turned on again after a certain period of time. As shown in Fig. 24, there is a region (a region enclosed by a triangle) in which the metal halide lamp fails to be restarted depending on the time for which the metal halide lamp has been extinguished when it is extinguished after it has been lighted for a short period of time of approximately 10 seconds to 30 seconds. This is a phenomenon that is observed especially with high-pressure discharge lamps containing a metal iodide. The starting high voltage causes amalgam, a mercury compound, or iodides to scatter and adhere to the vicinity of the tube wall around the electrodes to form a path through which a discharge current passes easily along the tube wall and discharge is formed along the discharge path. Usually, the discharge continues, and the substances evaporate and a steady lighting state is established as the temperature and pressure in the light-emitting tube becomes higher. However, when the high-pressure discharge lamp is extinguished after it has been lighted for a short period of time and before the substances evaporate, the inside of the light-emitting tube of the high-pressure discharge lamp maintains an unsteady state and the substances tend to return gradually to the initial state. In this unsteady state, the high-pressure discharge lamp is started by the starting high voltage but the iodides consume the electrons necessary to form discharge and a mode in which the high-pressure discharge lamp goes out continues.

When such a state occurs, the high-pressure discharge lamp can be started easily when it is once extinguished and allowed to be inoperative for a predetermined period of time to restore it to an initial state. Specifically, control is effective in which the starting voltage intermittent timer 34a applies a starting voltage intermittently so that, when the high-pressure discharge lamp cannot be started during the starting voltage generating period T1, the application of a starting high voltage to the high-pressure discharge lamp is quiescent during the starting voltage interrupting period T0 as in this embodiment. However, when the starting voltage intermittent timer 34a is unconditionally reset when the high-pressure discharge lamp goes out after a shift to the second operation period, it takes a long time to make a shift to the starting voltage quiescent period T0 since start-up from an initial state is done at restart. Since a starting high voltage of the starting voltage generating period T1 is first applied and a cycle consisting of dielectric breakdown, glow discharge, arc discharge, going out, and application of starting high voltage is continued, the restart takes longer time than usual. Thus, when the starting voltage intermittent timer 34a is reset when the second operation period has continued for a reference time or longer as in this embodiment, the starting voltage intermittent timer 34a is not reset when the second operation period has continued only for a short period of time. Therefore, at subsequent restart, start-up from an initial state is not done, and a shift to the starting voltage generating period can be made again after the high-pressure discharge lamp has become easy to restart through a brief starting voltage generating period and a sufficient starting voltage quiescent period. As a result, it is possible to restore the high-pressure discharge lamp to an initial state and make the high-pressure discharge lamp to start easily.

### (First Modification of Second Embodiment)

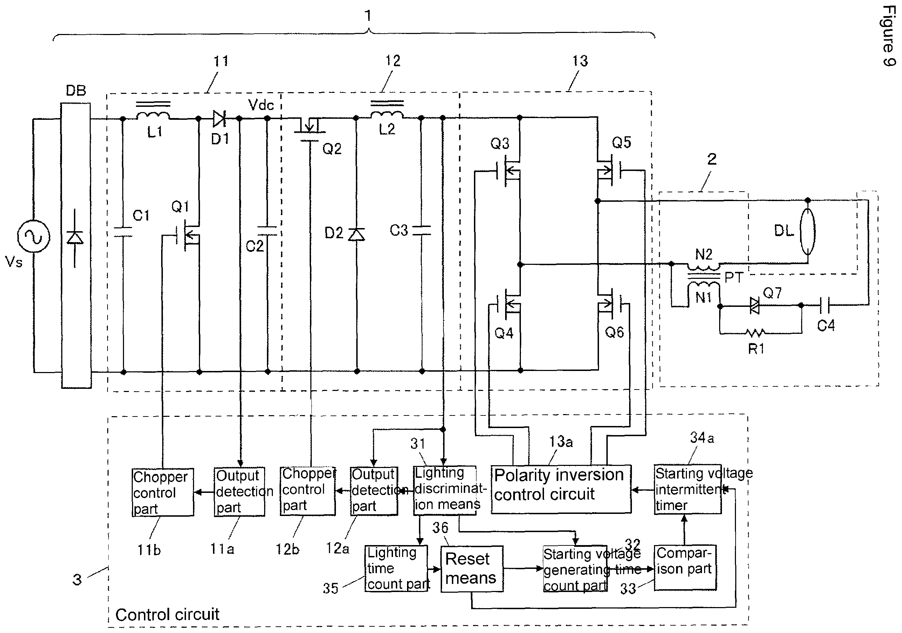

Fig. 9 is a circuit diagram of a high pressure discharge lamp lighting device according to a first modification of the second embodiment of the present invention. While it is the starting voltage intermittent timer 34a that is reset by the reset means 36 in Fig. 6, the count value of the duration of the first operation period measured by the starting voltage generating time count part 32 is simultaneously reset in the circuit shown in Fig. 9.

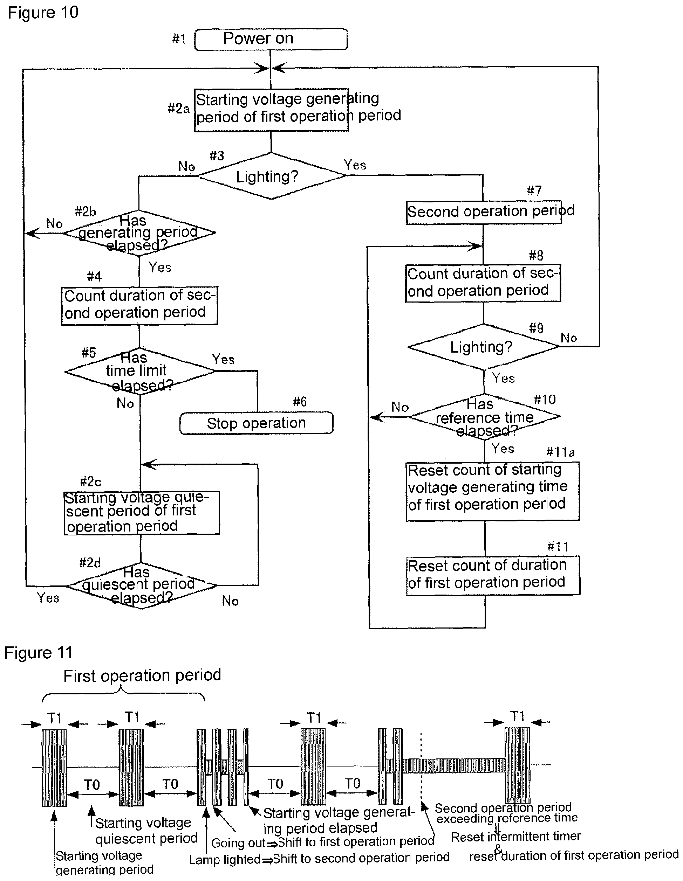

Fig. 10 shows a flowchart of the control of this modification. In the control shown in Fig. 7, when the second operation period has continued for a reference time or longer, the count of the starting voltage generating period in the first operation period is reset in #11a and the count of the duration of the first operation period is also reset at the same time in #11.

Fig. 11 shows a conceptual diagram of the operation of this modification. The horizontal axis represents the elapsed time after the start of the operation, and the vertical axis schematically represents the envelopes of the voltage between both ends of the high-pressure discharge lamp DL. In the operation shown in Fig. 11, the count value of the duration of the first operation period is also reset at the same time as the reset of the starting voltage intermittent timer 34a in the operation shown in Fig. 8.

When the count value of the duration of the first operation is simultaneously reset as described above, sufficient starting high voltage generating time can be ensured until the time limit in #5 elapses at restart of the high-pressure discharge lamp.

### (Second Modification of Second Embodiment)

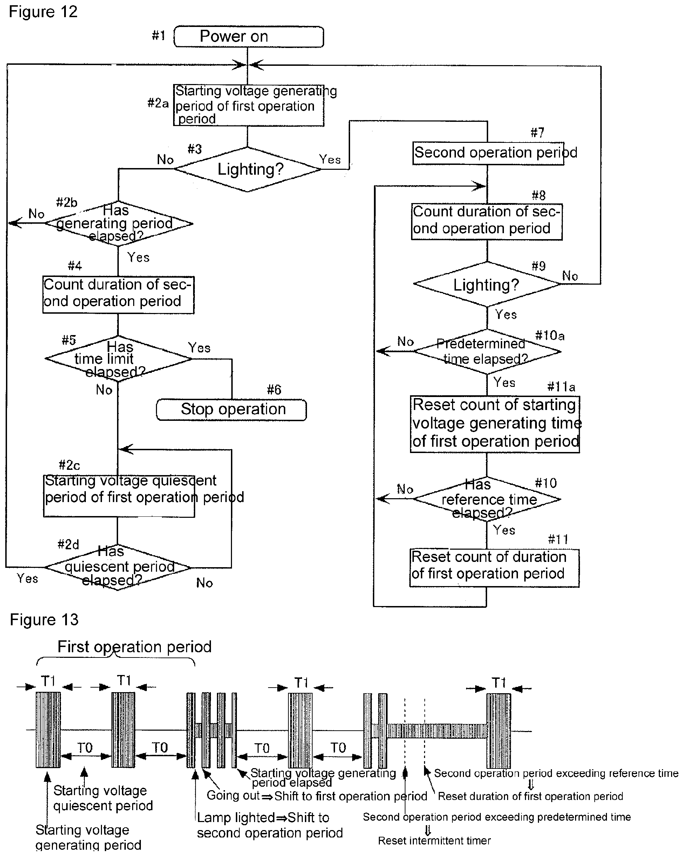

Fig. 12 shows a flowchart of the control of a second modification of the second embodiment of the present invention. In the control shown in Fig. 10, the timing of resetting the count value of the starting voltage generating period in the first operation period (the count value for use in the determination in #2b) is different from the timing of resetting the count value of the duration of the first operation period (the count value for use in the determination in #5). The circuit configuration may be the same as that shown in Fig. 9.

Fig. 13 shows a conceptual diagram of the operation of this modification. The horizontal axis represents the elapsed time after the start of the operation, and the vertical axis schematically represents the envelopes of the voltage between both ends of the high-pressure discharge lamp DL. In the operation shown in Fig. 13, the timing of resetting the starting voltage intermittent timer 34a is separated from the timing of resetting the count value of the duration of the first operation period in the operation shown in Fig. 11. In other words, the starting voltage intermittent timer 34a is reset when the second operation period exceeds a predetermined time, and the count value of the duration of the first operation period is reset when the second operation period exceeds a reference time.

The terms "time limit in #5", "reference time in #10", and "predetermined time in #10a" are terms of convenience used to distinguish them and may be referred to instead as "first reference time", "second reference time", and "third reference time", respectively. The time limit in #5 is a time to limit the duration of the first operation period within the time beyond which it is considered undesirable for the first operation period to continue. The reference time in #10 is a reference time for use in determining whether to reset the count value of the duration of the first operation period. The predetermined time in #10a is a predetermined time suitable to reset the count value of the starting voltage generating period in the first operation period.

### (Third Embodiment)

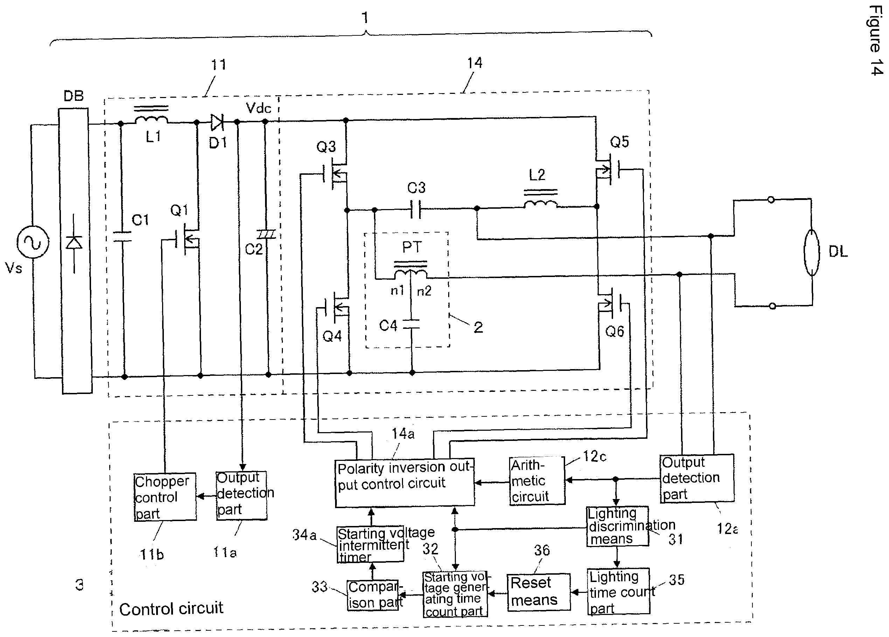

Fig. 14 is a circuit diagram of a high pressure discharge lamp lighting device according to a third embodiment of the present invention. The differences from the first and second embodiments are that a polarity inversion-type step-down chopper circuit 14 in which the step-down chopper circuit 12 and the polarity inversion circuit 13 are integrated is used in the electric power supply circuit 1, and that a resonant step-up circuit is used as the starting voltage generating circuit 2.

In the polarity inversion-type step-down chopper circuit 14, a series circuit of the inductor L2 and the capacitor C3 that function as an output filter of the step-down chopper circuit is connected between the connection point between switching elements Q3 and Q4 and the connection point between switching elements Q5 and Q6.

The starting voltage generating circuit 2 is constituted of a resonance circuit composed of the pulse transformer PT and the capacitor C4, and generates a resonance step-up voltage for start-up and restart that is applied to the high-pressure discharge lamp DL by the high-frequency switching operation of the switching elements Q3 to Q6 of the polarity inversion-type step-down chopper circuit 14 using the DC voltage Vdc applied to the polarity inversion-type step-down chopper circuit 14 as a power source.

The control circuit 3 controls the switching element Q1 of the step-up chopper circuit 11 and the switching elements Q3 to Q6 of the polarity inversion-type step-down chopper circuit 14. The control circuit 3 has an output detection part 11a for detecting the output voltage Vdc of the step-up chopper circuit 11; and a chopper control part 11b for controlling the switching element Q1 based on the result of detection by the output detection part 11a. The control circuit 3 also has an output detection part 12a for detecting the state of the high-pressure discharge lamp DL; and a lighting discrimination means 31 for discriminating whether or not the high-pressure discharge lamp DL is lighting based on the result of detection by the output detection part 12a.

A polarity inversion output control circuit 14a has a function of switching the operation of the polarity inversion-type step-down chopper circuit 14 based on a discrimination signal from the lighting discrimination means 31 between a first operation period (starting mode) to generate a high voltage to start the high-pressure discharge lamp DL and a second operation period (lighting mode) to light the high-pressure discharge lamp DL steadily. An arithmetic circuit 12c has a calculation function of determining the operation frequency and ON period of the switching elements Q5 and Q6 based on the voltage between both ends of the high-pressure discharge lamp DL detected by the output detection part 12a. The output of the arithmetic circuit 12c controls each of the switching elements Q3 to Q6 via the polarity inversion output control circuit 14a during the second operation period. In the first operation period, a starting voltage generating period for which a starting high voltage is generated and a starting voltage quiescent period for which operation is interrupted are alternately repeated at intervals of the period of the starting voltage intermittent timer 34a.

The lighting time count part 35 measures the elapsed time since the high-pressure discharge lamp DL is lighted in response to the result of discrimination by the lighting discrimination means 31. The starting voltage generating time count part 32 measures the time for which the starting voltage generating circuit 2 generates a starting voltage in the first operation period. The comparison part 33 compares the operation time of the starting voltage generating circuit 2 measured by the starting voltage generating time count part 32 with a predetermined time limit. The starting voltage intermittent timer 34a controls the operation and interruption of the starting voltage generating circuit 2 in response to the comparison result from the comparison part 33. The reset means 36 resets at least the operation time of the starting voltage generating circuit 2 measured by the starting voltage generating time count part 32 when the lighting time measured by the lighting time count part 32 exceeds a predetermined reference time. The reset means 36 may simultaneously reset the starting voltage intermittent timer 34a.

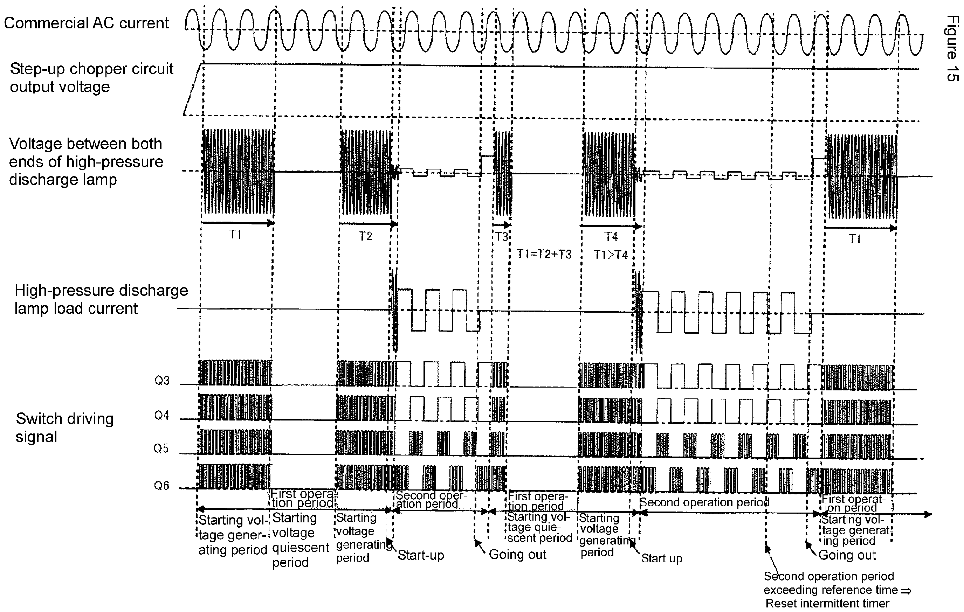

Fig. 15 is an operation waveform chart of this embodiment. When the commercial AC power source Vs is applied, the control circuit 3 maintains the DC voltage Vdc at a predetermined constant value both during the lighting time when the high-pressure discharge lamp DL is lighting and the non-lighting time when the high-pressure discharge lamp DL is not lighting by turning on and off the switching element Q1 of the step-up chopper circuit 11 at approximately several dozen kHz and controlling the pulse width properly depending on the DC voltage Vdc. The step-up chopper circuit 11 also has a function of increasing the input power factor from the commercial AC power source Vs to reduce input current distortion.

When the DC voltage Vdc reaches a predetermined value, the polarity inversion-type step-down chopper circuit 14 starts operation. At this point, the high-pressure discharge lamp DL is in a non-lighting state, i.e., not lighting, and the high-pressure discharge lamp DL is in the same state as its open state and in a high impedance state with the equivalent impedance thereof being nearly infinite. At this time, the polarity inversion-type step-down chopper circuit 14 starts operation in the first operation period (starting mode) to start the high-pressure discharge lamp DL and alternately repeats a state in which the switching elements Q3 and Q6 are on and a state in which the switching elements Q4 and Q5 are on at a predetermined frequency f0 (approximately several hundred kHz). The frequency f0 is a frequency close to the resonant frequency fr of a series resonance circuit composed of a primary winding n1 of the pulse transformer PT and the capacitor C4, where a sinusoidal wave-shaped high voltage is generated in the primary winding n1. The sinusoidal wave-shaped high voltage generated in the primary winding n1 is stepped up according to the turn ratio between the primary winding n1 and the secondary winding n2 of the pulse transformer PT and is applied to the high-pressure discharge lamp DL via the capacitor C3. As a result, the high-pressure discharge lamp DL undergoes dielectric breakdown and is started.

The starting voltage generating time count part 32 measures the time for which the starting high voltage is generated, from when the high-pressure discharge lamp DL is started until the lighting discrimination means 31 determines that the high-pressure discharge lamp DL is lighting. When the high-pressure discharge lamp DL is not started for some reason or the commercial power source is applied to the high pressure discharge lamp lighting device with the high-pressure discharge lamp DL unconnected, the starting voltage generating circuit 2 continues operation and a starting high voltage continues to be generated. However, when the comparison part 33 compares the starting high voltage generating time with a predetermined time limit and the starting high voltage generating time exceeds the time limit, the starting voltage intermittent timer 34a is stopped, and a control signal is sent to the polarity inversion output control circuit 14a so as to turn off the switching elements Q3 to Q6 of the polarity inversion-type step-down chopper circuit 14 to stop the operation of the starting voltage generating circuit 2 by stopping the operation of the polarity inversion-type step-down chopper circuit 14.

When the high-pressure discharge lamp DL is started by the starting high voltage generated during the starting voltage generating period, the high-pressure discharge lamp DL turns to a low impedance state close to short circuit, and the voltage between both the ends of the high-pressure discharge lamp DL decreases to almost 0 V. When the voltage between both ends of the high-pressure discharge lamp DL falls below a lighting discrimination voltage threshold value, the lighting discrimination means 31 determines that the high-pressure discharge lamp DL has lighted and its discrimination signal is input into the arithmetic circuit 12c. In response to the signal, the arithmetic circuit 12c switches the operation of the polarity inversion-type step-down chopper circuit 14 to the second operation period (lighting mode) to light the high-pressure discharge lamp DL steadily.

In the second operation period (lighting mode), the polarity inversion-type step-down chopper circuit 14 repeats an operation in which the switching elements Q3 and Q4 are alternately turned on and off at a predetermined frequency fa (approximately about several hundred kHz), and, at this time, the switching element Q6 is turned on and off at a predetermined frequency fb (approximately several dozen kHz) during the period when the switching element Q3 is on and the switching element Q5 is turned on and off at the predetermined frequency fb (approximately several dozen kHz) during the period when the switching element Q4 is on. By the polarity inverting step-down chopper operation, a rectangular wave AC voltage with the frequency fa is applied to the high-pressure discharge lamp DL. At this time, the capacitor C3 and the inductor L2 function as a filter circuit of the step-down chopper circuit, and anti-parallel diodes in the switching elements Q5 and Q6 function as regenerated current passing diodes for the step-down chopper circuit.

The voltage between both ends of the high-pressure discharge lamp DL is low immediately after start-up but, as the temperature and pressure in the light-emitting tube increases, the voltage between both the ends of the lamp increases to a rated value and the high-pressure discharge lamp DL lamp turns to a steady lighting state. In the control circuit 3, the output detection part 12a detects the state of the high-pressure discharge lamp DL, and the arithmetic circuit 12c properly controls the chopping frequency and ON period of the switching elements Q5 and Q6 based on the voltage between both ends of the high-pressure discharge lamp DL so that appropriate electric power can be supplied to the high-pressure discharge lamp DL to light the high-pressure discharge lamp DL steadily.

In the first operation period to start the high-pressure discharge lamp DL, the starting voltage generating circuit 2 repeats a starting voltage generating period for which a starting high voltage is generated and a starting voltage quiescent period for which the operation is interrupted alternately at intervals of the period of the starting voltage intermittent timer 34a. When the high-pressure discharge lamp DL is started by the starting high voltage generated during the starting voltage generating period, the operations shifts to the second operation period to light the high-pressure discharge lamp DL steadily with the lighting discrimination means 31, and the lighting time count part 35 starts measuring the lighting time. When the high-pressure discharge lamp DL goes out before the lighting time exceeds a reference time, the polarity inversion output control circuit 14a, in response to the discrimination result from the lighting discrimination means 31, shifts again to the first operation period and generates a starting high voltage. At this time, since the starting voltage intermittent timer 34a has not been reset, the operation is resumed from a point in the middle of the starting voltage generating period described above.

Referring to the example shown in Fig. 15, the high-pressure discharge lamp DL is not started in the first starting voltage generating period T1 and the operation shifts to the starting voltage quiescent period. In the next starting voltage generating period T2, the high-pressure discharge lamp DL is started and the operation shifts to the second operation period. However, since the high-pressure discharge lamp DL goes out before the reference time elapses, the operation shifts to the first operation period again with the starting voltage intermittent timer 34a left unreset. In this case, the starting voltage intermittent timer 34a starts operation at a point in the middle of the previous starting voltage generating period, and the operation immediately shifts to a starting voltage quiescent period through a brief starting voltage generating period T3 (= T1-T2). In other words, in the case where a phenomenon in which the high-pressure discharge lamp goes out before the lighting time exceeds the reference time repeatedly occurs, when the total of the starting high voltage generating times reaches the starting voltage generating period of the starting voltage intermittent timer 34a, the operation shifts to the starting voltage quiescent period and the generation of a starting high voltage is interrupted. The temperature of the light-emitting tube of the high-pressure discharge lamp DL decreases during the quiescent period and the high-pressure discharge lamp DL becomes easily started. Thus, even a high-pressure discharge lamp having characteristics shown in Fig. 24 has a lower probability of failing to be started by restoring the inside of the light-emitting tube to an initial state.

When the starting voltage quiescent period has elapsed, the operation shifts to the starting voltage generating period again, and a starting high voltage is generated to start the high-pressure discharge lamp. In the next starting voltage generating period T4, the high-pressure discharge lamp DL is started and the operation shifts to the second operation period. At this time, since the high-pressure discharge lamp DL is started in the stage where T4 < T1, the starting voltage generating period of the starting voltage intermittent timer 34a still has a value (T1-T4) to count. However, when the second operation period continues for a long period of time and the reference time has elapsed before the high-pressure discharge lamp DL goes out, the starting voltage intermittent timer 34a is immediately reset. That is, since the reset means 36 resets the starting voltage generating time measured by the starting voltage generating time count part 32 and the starting voltage intermittent timer 34a when a reference time elapses after the high-pressure discharge lamp has been started and the operation has shifted to the second operation period, the operation is started from an initial state and a sufficient starting voltage generating period can be ensured at restart in the case where the high-pressure discharge lamp goes out for some reason. When the high-pressure discharge lamp DL goes out in this stage, the next starting voltage generating period does not have a length (T1-T4) which is counted from the point in the middle of the period, but continues over the period T1 at maximum.

It should be noted that when the starting voltage generating time measured by the starting voltage generating time count part 32 exceeds the time limit set in the comparison part 33, the operation of the starting voltage intermittent timer 34a is stopped and the generation of the starting high voltage from the starting voltage generating circuit 2 is stopped to prevent continuous generation of the starting high voltage as in the second embodiment. The control flow of this embodiment may be same as that shown in Fig. 10.

It should be noted that the starting voltage generating circuit using the polarity inversion-type step-down chopper circuit and the resonant step-up circuit as described in this embodiment may be also used in other embodiments.

### (Fourth Embodiment)

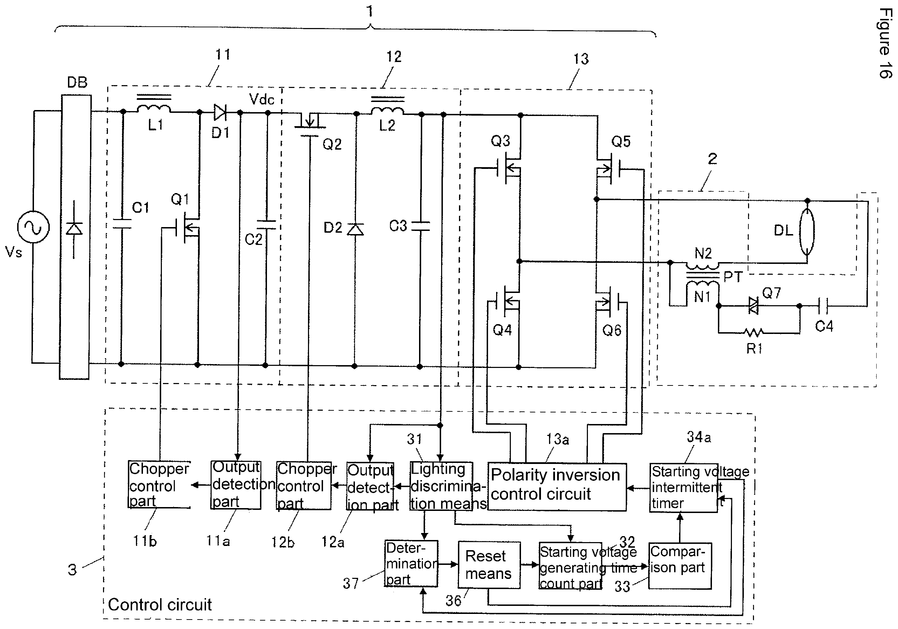

Fig. 16 is a circuit diagram of a high pressure discharge lamp lighting device according to a fourth embodiment of the present invention. The differences from the second embodiment described above are that the lighting time count part 35 is omitted, and that the time-measuring state of the starting voltage generating period in the starting voltage intermittent timer 34a is monitored by a determination part 37 instead, and the second operation period is regarded as having been continued for a reference time or longer when the result of discrimination by the lighting discrimination means 31 is "lighting" at the end of the starting voltage generating period.

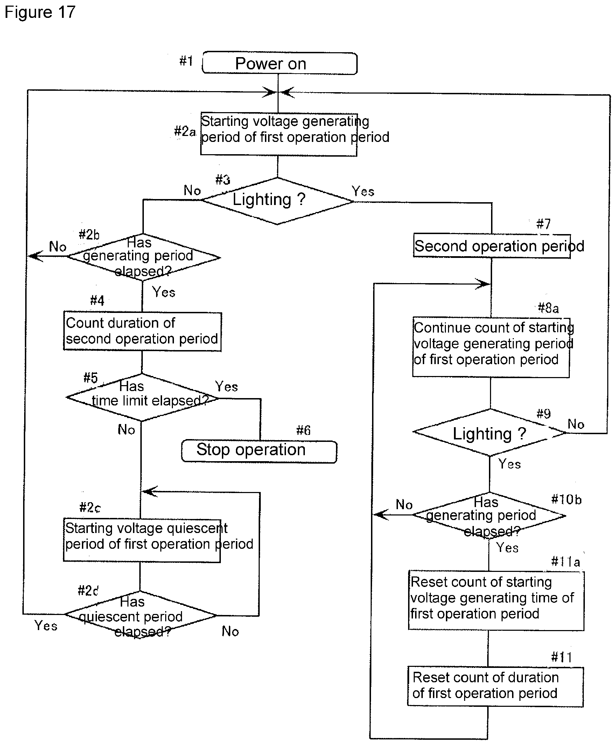

Fig. 17 shows a flowchart of control of this embodiment. The #8 and #10 in Fig. 10 are replaced by #8a and #10b in Fig. 17. First, instead of counting the duration of the second operation period in #8 in Fig. 10, counting the starting voltage generating period in the first operation period is continued in #8a in Fig. 17. In addition, instead of determining whether or not the duration of the second operation period has exceeded a reference time in #10 in Fig. 10, it is determined whether or not the starting voltage generating period in the first operation period has elapsed in #10b in Fig. 17. The other operations are the same as those in Fig. 10, and when the starting voltage generating period in the first operation period has elapsed, the count of the starting voltage generating period in the first operation period is reset in #11a, and the count of the duration of the first operation period is simultaneously reset in #11.

Fig. 18 shows a conceptual diagram of operation of this embodiment. The operation of the starting voltage generating period timer in the starting voltage intermittent timer 34a and the envelopes of the voltage between both ends of the high-pressure discharge lamp DL are schematically shown. The high-pressure discharge lamp is started by a starting high voltage generated during the starting voltage generating period in the first operation period, and the count operation of the starting voltage intermittent timer is continued even after the shift to the second operation period has been completed. When the time corresponding to the starting voltage generating period ended, the determination part 37 reads the result of discrimination from the lighting discrimination means 31. When the high-pressure discharge lamp is lighting and the second operation period has been continued at this point, the starting voltage intermittent timer 34a and the starting voltage generating time count part 32 are reset. Alternatively, only one of them may be reset.

When the high-pressure discharge lamp is not started for some reason or the commercial power source is applied to the high pressure discharge lamp lighting device with the high-pressure discharge lamp unconnected, the starting voltage generating period and the starting voltage quiescent period are repeated according to the starting voltage intermittent timer 34a, and the first operation period is continued, as in the case of the second embodiment described above. When the comparison part 33 determines that the duration of the first operation period measured by the starting voltage generating time count part 32 reaches a time limit, the operation of the starting voltage generating circuit 2 is stopped (#5, #6).

This embodiment does not require the lighting time count part 35 for measuring the lighting time after the high-pressure discharge lamp has been started and a shift to the second operation period has been completed. This embodiment is simple in configuration, but can prevent the generation of an unnecessary starting high voltage and ensure safety even when an end-of-life high-pressure discharge lamp fails to be started and can provide a normal high-pressure discharge lamp with reliable starting and restarting characteristics.

Although a device having a full-bridge configuration as the electric power supply circuit 1 is shown in the embodiments described in the foregoing, it is apparent that the present invention is not limited thereto and a half bridge configuration or other configurations can be also used. As for the starting voltage generating circuit 2, although a configuration in which a resonant step-up circuit is driven at a high frequency (Fig. 14) and a configuration using the voltage responsive switching element Q7 which generates starting pulses at polarity inversions (Fig. 2, etc.) are shown, it is apparent that the present invention is not limited to these configurations and may use a configuration which generates starting pulses at arbitrary timings. For example, when a starting voltage generating circuit having a configuration in which a switching element having a control electrode is connected in series to the primary winding of a pulse transformer and an electric charge accumulating capacitor is used, starting pulses can be generated at times when pulse signals are input into the control electrode.

### (Fifth Embodiment)

A configuration of an illumination fixture using a high pressure discharge lamp lighting device of the present invention is shown in Fig. 19 and Fig. 20. In the drawings, DL represents a high-pressure discharge lamp, and numerals 15, 16 and 17 represent a ballast housing the circuits of the lighting device, a lamp body to which the high-pressure discharge lamp DL is attached, and an electric cable, respectively. An illumination system may be constructed by combining a plurality of the illumination fixtures. Figs. 20(a) and (b) shows examples in which the high-pressure discharge lamp is used as a spotlight, and Figs. 20(c) shows an example in which the high-pressure discharge lamp is used as a downlight.

When the high pressure discharge lamp lighting device described above is used in these illumination fixtures, it is possible to prevent generation of an unnecessary starting high voltage to ensure power saving and safety even when a high-pressure discharge lamp is fails to be started at, for example, the end of useful life, and to provide a normal high-pressure discharge lamp with reliable starting and restarting characteristics.

### [Description of Reference Numerals]

- 1: Electric power supply circuit
- 2: Starting voltage generating circuit
- 3: Control circuit
- 31: Lighting discrimination means
- 32: Starting voltage generating time count part
- 36: Reset means
- DL: High-pressure discharge lamp

## Claims

1. A high pressure discharge lamp lighting device, comprising:
an electric power supply circuit (1) for supplying electric power to a high-pressure discharge lamp (DL);
a starting voltage generating circuit (2) for generating a starting high voltage to start discharging the high-pressure discharge lamp (DL); and
a control circuit (3) for controlling the electric power supply circuit (1) and the starting voltage generating circuit (2),
the control circuit (3) comprising:
lighting discrimination means (31) adapted to discriminate whether or not the high-pressure discharge lamp (DL) is lighting;
means adapted to switch between a first operation period to operate the starting voltage generating circuit (2) to start discharging the high-pressure discharge lamp (DL) and a second operation period to maintain a steady arc discharge after the high-pressure discharge lamp (DL) has started discharging, based on a result of discrimination from the lighting discrimination means (31);
measurement means (32) adapted to measure a duration of the first operation period;
means (33, 34) adapted to stop the operation of the starting voltage generating circuit (2) during the first operation period when the cumulative total of the duration of the first operation period exceeds a time limit;
measure means (35) for measuring the duration of the second operation period; and
reset means (36) adapted to initialize the measured duration of the first operation period measured by the measurement means (32) upon continuation of the second operation period for a reference time or longer.

2. The high pressure discharge lamp lighting device according to claim 1, comprising, as the measurement means (32) adapted to measure operation information of the first operation, means adapted to measure a starting voltage generating period for which the starting high voltage is generated during the first operation period, and means adapted to measure a starting voltage quiescent period for which generation of the starting high voltage is interrupted.

3. The high pressure discharge lamp lighting device according to claim 2, wherein the operation information of the first operation period measured by the measurement means (32) is measurement time of the starting voltage generating period for which the starting high voltage is generated during the first operation period.

4. The high pressure discharge lamp lighting device according to any one of claims 1 to 3, wherein the reference time is 0.5 seconds or longer.

5. The high pressure discharge lamp lighting device according to claim 4, wherein the reference time is 30 seconds or shorter.

6. The high pressure discharge lamp lighting device according to any one of claims 1 to 3, wherein the means (32) adapted to measure a starting voltage generating period for which the starting high voltage is generated during the first operation continues measurement of the starting voltage generating period even after the high-pressure discharge lamp (DL) has lighted and a shift to the second operation period has been completed, and determines that the second operation period has continued for the reference time or longer upon condition that the high-pressure discharge lamp (DL) has been lighting upon completion of the starting voltage generating period.

7. An illumination fixture comprising a high pressure discharge lamp lighting device according to any one of claims 1 to 6.

## Patentansprüche

1. Hochdruckentladungslampenbeleuchtungseinrichtung aufweisend:
einen elektrischen Leistungsversorgungsschaltkreis (1) für das Bereitstellen elektrischer Leistung für eine Hochdruckentladungslampe (DL);
einen Startspannungserzeugungsschaltkreis (2) zum Erzeugen einer Starthochspannung zum Starten der Entladung der Hochdruckentladungslampe (DL); und
einen Steuerschaltkreis (3) zum Steuern des elektrischen Leistungsversorgungsschaltkreises (1) und des Startspannungserzeugungsschaltkreises (2),
wobei der Steuerschaltkreis (3) aufweist:
Beleuchtungsunterscheidungsmittel (31), das dazu eingerichtet ist zu unterscheiden, ob die Hochdruckentladungslampe (DL) leuchtet oder nicht;
Mittel, das dazu eingerichtet ist, zwischen einem ersten Betriebsabschnitt zum Betreiben des Startspannungserzeugungsschaltkreises (2) zum Starten der Entladung der Hochdruckentladungslampe (DL) und einem zweiten Betriebsabschnitt zur Aufrechterhaltung einer stetigen Bogenentladung, nachdem die Hochdruckentladungslampe (DL) begonnen hat zu entladen, basierend auf einem Ergebnis der Unterscheidung von dem Beleuchtungsunterscheidungsmittel (31) umzuschalten;
Messmittel (32), das dazu eingerichtet ist, eine Zeitdauer des ersten Betriebsabschnitts zu messen;
Mittel (33, 34), das dazu eingerichtet ist, den Betrieb des Startspannungserzeugungsschaltkreises (2) während der ersten Betriebszeitdauer zu stoppen, wenn die kumulative Gesamtzeitdauer des ersten Betriebsabschnitts eine Zeitgrenze überschreitet;
Messmittel (35) zum Messen der Zeitdauer des zweiten Betriebsabschnitts; und
Rückstellmittel (36), das dazu eingerichtet ist, die gemessene Zeitdauer des ersten Betriebsabschnitts, das durch das Messmittel (32) gemessen wurde, zu initialisieren, nach der Fortsetzung des zweiten Betriebsabschnitts für eine Bezugszeit oder länger.

2. Hochdruckentladungslampenbeleuchtungseinrichtung nach Anspruch 1, aufweisend als Messmittel (32), das zum Messen der Betriebsinformation des ersten Betriebs eingerichtet ist, Mittel, das dazu eingerichtet ist, eine Startspannungserzeugungszeitdauer während der die Starthochspannung während des ersten Betriebsabschnitts erzeugt wird, zu messen, und Mittel, das dazu eingerichtet ist, eine Startspannungsruhezeitdauer, während die Erzeugung der Starthochspannung unterbrochen ist, zu messen.

3. Hochdruckentladungslampenbeleuchtungseinrichtung nach Anspruch 2, wobei die Betriebsinformation des ersten Betriebsabschnitts, die durch das Messmittel (32) gemessen wird, die Messzeit der Startspannungserzeugungszeitdauer ist, während der die Starthochspannung während des ersten Betriebsabschnitts erzeugt wird.

4. Hochdruckentladungslampenbeleuchtungseinrichtung nach irgendeinem der Ansprüche 1-3, wobei die Bezugszeit 0,5 Sekunden oder länger ist.

5. Hochdruckentladungslampenbeleuchtungseinrichtung nach Anspruch 4, wobei die Bezugszeit 30 Sekunden oder kürzer ist.

6. Hochdruckentladungslampenbeleuchtungseinrichtung nach irgendeinem der Ansprüche 1-3, wobei das Mittel (32), das dazu eingerichtet ist, eine Startspannungserzeugungszeitdauer zu messen, während der die Starthochspannung während des ersten Betriebs erzeugt wird, die Messung der Startspannungserzeugungszeitdauer auch fortsetzt, nachdem die Hochdruckentladungslampe (DL) zum Leuchten gebracht und ein Übergang zum zweiten Betriebsabschnitt abgeschlossen wurde, und bestimmt, dass der zweite Betriebsabschnitt für die Bezugszeit oder länger fortgesetzt wurde unter der Bedingung, dass die Hochdruckentladungslampe (DL) zum Leuchten gebracht wurde nach dem Abschluss der Startspannungserzeugungszeitdauer.

7. Beleuchtungshalterung aufweisend eine Hochdruckentladungslampenbeleuchtungseinrichtung nach irgendeinem der Ansprüche 1-6.

## Revendications

1. Dispositif d'éclairage à lampe à décharge haute pression, comprenant :
un circuit d'alimentation électrique (1) destiné à alimenter en courant électrique une lampe à décharge haute pression (DL)) ;
un circuit de génération de tension de démarrage (2) destiné à générer une haute tension de démarrage pour lancer la décharge de la lampe à décharge haute pression (DL) ; et
un circuit de commande (3) destiné à commander le circuit d'alimentation électrique (1) et le circuit de génération de tension de démarrage (2),
le circuit de commande (3) comprenant :
un moyen de discrimination d'éclairage (31) adapté pour discriminer si oui ou non la lampe à décharge haute pression (DL) éclaire ;
un moyen adapté pour commuter entre une première période de fonctionnement, destinée à faire fonctionner le circuit de génération de tension de démarrage (2) en vue de démarrer la décharge de la lampe à décharge haute pression (DL), et une deuxième période de fonctionnement destinée à maintenir une décharge d'arc constante après que la lampe à décharge haute pression (DL) a commencé la décharge, sur la base d'un résultat de discrimination provenant du moyen de discrimination d'éclairage (31) ;
un moyen de mesure (32) adapté à mesurer une durée de la première période de fonctionnement ;
des moyens (33, 34) adaptés pour arrêter le fonctionnement du circuit de génération de tension de démarrage (2) au cours de la première période de fonctionnement, lorsque le total cumulé de la durée de la première période de fonctionnement dépasse une limite de temps ;
un moyen de mesure (35) destiné à mesurer la durée de la deuxième période de fonctionnement ; et
un moyen de réinitialisation (36) adapté pour initialiser la durée mesurée de la première période de fonctionnement mesurée par le moyen de mesure (32), après la poursuite de la deuxième période de fonctionnement pendant un temps de référence ou un temps plus long.

2. Dispositif d'éclairage à lampe à décharge haute pression selon la revendication 1, comprenant, en tant que moyen de mesure (32) adapté pour mesurer des informations de fonctionnement du premier fonctionnement, un moyen adapté pour mesurer une période de génération de tension de démarrage pour laquelle la haute tension de démarrage est générée pendant la première période de fonctionnement, et un moyen adapté pour mesurer une période de repos de tension de démarrage pour laquelle la génération de la haute tension de démarrage est interrompue.

3. Dispositif d'éclairage à lampe à décharge haute pression selon la revendication 2, dans lequel les informations de fonctionnement de la première période de fonctionnement mesurées par le moyen de mesure (32) sont constituées du temps de mesure de la période de génération de tension de démarrage pour laquelle la haute tension de démarrage est générée pendant la première période de fonctionnement.

4. Dispositif d'éclairage à lampe à décharge haute pression selon l'une quelconque des revendications 1 à 3, dans lequel le temps de référence est de 0,5 secondes ou plus.

5. Dispositif d'éclairage à lampe à décharge haute pression selon la revendication 4, dans lequel le temps de référence est de 30 secondes ou moins.

6. Dispositif d'éclairage à lampe à décharge haute pression selon l'une quelconque des revendications 1 à 3, dans lequel le moyen (32) adapté pour mesurer une période de génération de tension de démarrage pour laquelle la haute tension de démarrage est générée pendant le premier fonctionnement continue de mesurer la période de génération de tension de démarrage, même après que la lampe à décharge haute pression (DL) s'est allumée et qu'un passage à la deuxième période de fonctionnement a été effectué, et détermine que la deuxième période de fonctionnement a continué pendant le temps de référence ou plus longtemps, à la condition que la lampe à décharge haute pression (DL) se soit allumée à la suite de l'achèvement de la période de génération de tension de démarrage.

7. Appareil d'éclairage comprenant un dispositif d'éclairage à lampe à décharge haute pression selon l'une quelconque des revendications 1 à 6.
